# EUROPÄISCHE PATENTSCHRIFT

(11) **EP 1 854 657 B1**
(45) Veröffentlichungstag und Bekanntmachung des Hinweises auf die Patenterteilung: **28.12.2011**
(21) Anmeldenummer: 07008478.5
(22) Anmeldetag: 26.04.2007
(51) Int. Cl.: B60N 2/06, B60N 2/30, B60R 5/04, B60N 2/36

(54) **Überbrückungseinrichtung für eine Vertiefung zwischen einem Fahrzeugsitz und einem Laderaumboden**
Bridging device for a depression between a vehicle seat and a loading space base
Dispositif d'enjambement pour un évidement entre un siège de véhicule et le plancher d'un coffre à bagages

(30) Priorität: 10.05.2006 DE 102006021719
(43) Veröffentlichungstag der Anmeldung: 14.11.2007
(73) Patentinhaber: GM Global Technology Operations LLC, Detroit, MI 48265-3000 (US)
(72) Erfinder: Eustachi, Markus, 65462 Ginsheim-Gustavsburg (DE); Polster, Michael, 65462 Ginsheim (DE); Schober, Uwe, 65468 Trebur (DE)
(74) Vertreter: Daniel, Ulrich W.P.

(56) Entgegenhaltungen:
- EP-A1- 0 662 406
- DE-A1- 10 261 399
- DE-A1- 10 335 055
- DE-U1-202005 007 157

## Beschreibung

Die vorliegende Erfindung betrifft eine Überbrückungseinrichtung für eine Vertiefung zwischen einem Fahrzeugsitz und einem Laderaumboden mit einem Basisteil und einer Abdeckplatte, wobei die Abdeckplatte um eine erste Schwenkachse verschwenkbar an dem Basisteil befestigt ist und in eine vorbestimmte Rotationsrichtung um die erste Schwenkachse vorgespannt ist. Die vorliegende Erfindung betrifft ferner eine Kraftfahrzeuginneneinrichtung mit einer solchen Überbrückungseinrichtung.

Aus dem Stand der Technik sind unterschiedliche Kraftfahrzeuginneneinrichtungen bekannt, bei denen eine Vertiefung zwischen einem hinteren Fahrzeugsitz bzw. einer hinteren Sitzbank und dem dahinter angeordneten Laderaumboden ausgebildet ist, was auf einen tiefer liegenden Fahrzeugboden im Bereich der Fahrzeugsitze zurückzuführen ist. Um den Laderaum oberhalb des Laderaumbodens bei nach vorne verschobenen Fahrzeugsitzen oder bei Fahrzeugsitzen mit nach vorne geklappter Rückenlehne effektiv nutzen zu können, sind ferner so genannte Überbrückungseinrichtungen vorgesehen, die die Vertiefung zwischen dem Fahrzeugsitz und dem Laderaumboden überbrücken. Auf diese Weise wird einerseits verhindert, dass Teile des Ladeguts ungewollt in die Vertiefung fallen, andererseits verlängert die Überbrückungseinrichtung den nutzbaren Laderaumboden, so dass ein größerer Laderaum geschaffen ist.

Es sind insbesondere Überbrückungseinrichtungen bekannt, die sich aus einer oder mehreren Platten zusammensetzen. So beschreibt die DE 103 45 710 B4 eine Kraftfahrzeuginneneinrichtung mit einer Überbrückungseinrichtung, die aus mehreren miteinander verbundenen und zueinander verschwenkbaren Platten besteht. Die Überbrückungseinrichtung ist dabei in der Unterseite des Sitzteils eines Fahrzeugsitzes angeordnet und kann nach dem Vorklappen des Sitzteils entfaltet werden, um die Vertiefung zwischen dem Fahrzeugsitz und dem Laderaumboden zu überbrücken. Der Aufbau der bekannten Überbrückungseinrichtung ist jedoch sehr komplex, außerdem entfaltet sich die bekannte Überbrückungseinrichtung nicht automatisch, was die Handhabung erschwert.

Eine weitere Kraftfahrzeuginneneinrichtung mit Überbrückungseinrichtung ist in der DE 100 12 590 A1 offenbart. Die Überbrückungseinrichtung wird von einer Klappe gebildet, die verschwenkbar an der Rückenlehne des Fahrzeugsitzes angeordnet ist. Auf der dem Laderaumboden zugewandten Seite erstreckt sich die Klappe in eine Aufnahme, die zwischen der Verkleidung des Laderaumbodens und dem Fahrzeugboden ausgebildet ist. Wird die Rückenlehne nach vorne auf das Sitzteil des Fahrzeugsitzes verschwenkt, so wird die Klappe einerseits um die Schwenkachse an der Rückenlehne verschwenkt und andererseits nach vorne aus der Aufnahme gezogen, um in der erreichten Position die Vertiefung zwischen dem Fahrzeugsitz und dem dahinter angeordneten Laderaumboden zu überbrücken.

Die EP 1568536 A2 beschreibt eine Überbrückungseinrichtung in einer Kraftfahrzeuginneneinrichtung, die eine einstückig mit dem Laderaumboden ausgebildete Abdeckplatte umfasst. An dem Übergang zwischen der Abdeckplatte und dem Laderaumboden ist eine lang gestreckte Materialschwächung vorgesehen, so dass eine Schwenkachse ausgebildet ist, um die die Abdeckplatte verschwenkt werden kann. Das der Schwenkachse abgewandte Ende der Abdeckplatte liegt an der Rückseite der Rückenlehne eines Fahrzeugsitzes an und überbrückt somit die zwischen dem Fahrzeugsitz und dem Laderaumboden vorhandene Vertiefung. Die Abdeckplatte ist dabei gegen die Rückenlehne vorgespannt. Wird die Rückenlehne als auch das Sitzteil nach vorne verschwenkt, so folgt die Abdeckplatte aufgrund der Vorspannung dieser Bewegung, indem sie um die Schwenkachse verschwenkt. Aus der Praxis sind ferner ähnliche Überbrückungseinrichtungen mit einer Abdeckplatte bekannt, bei denen die Abdeckplatte mit Hilfe einer Metallfeder gegen die Rückenlehne vorgespannt sind.

Die aus der Praxis bekannten Überbrückungseinrichtungen haben den Nachteil, dass laute Geräusche beim Verschwenken der Bestandteile erzeugt werden und es - wie im Falle der EP 1568536 A2 - zu Materialermüdungserscheinungen im Bereich der durch die Materialschwächung erzeugten Schwenkachse kommen kann, die letztlich zu einer geringeren Vorspannung der Abdeckplatte gegen die Rückenlehne des Fahrzeugsitzes führt.

Die DE 103 35 055 A1 offenbart eine Abdeckung für einen Spalt, bei der eine Rückstelleinrichtung zwischen einer Abdeckklappe und einem Scharnierträger eine Vorspannung der Abdeckklappe in die Grundstellung bewirkt. Als Rückstelleinrichtung wird unter anderem ein Gummiband vorgeschlagen.

Die DE 102 61 399 A1 offenbart eine Spaltabdeckung nach dem Oberbegriff des Anspruchs 1, bei der ein Klappenelement zur Abdeckung des Spaltes um eine Schwenkachse verschwenkbar an einer Laderaumabdeckung angeordnet ist. Das Klappenelement weist im Bereich der Schwenkachse eine Drehfeder auf, so dass das Klappenelement federbelastet bzw. vorgespannt ist. Darüber hinaus schlägt die DE 102 61 399 A1 vor, das Klappenelement durch eine zusätzliche Schwenkachse zu unterteilen, so dass das Klappenelement optimal an den jeweils entstehenden Spalt angepasst werden kann.

Die aus der DE 102 61 399 A1 bekannte Spaltabdeckung hat unter anderem den Nachteil, dass diese einen relativ aufwändigen Aufbau aufweist und nur relativ geräuschvoll bewegbar ist, wobei die Vorspannung des Klappenelements nicht über längere Zeit gewährleistet ist.

Es ist daher eine Aufgabe der vorliegenden Erfindung, eine Überbrückungseinrichtung für eine Vertiefung zwischen einem Fahrzeugsitz und einem Laderaumboden zu schaffen, die geräuschlos arbeitet, einen einfachen Aufbau aufweist und eine dauerhaft ausreichende Vorspannung gegen den Fahrzeugsitz ermöglicht. Eine weitere Aufgabe der vorliegenden Erfindung besteht darin, eine Kraftfahrzeuginneneinrichtung mit einer solchen vorteilhaften Überbrückungseinrichtung zu schaffen.

Diese Aufgabe wird durch die in den Patentansprüchen 1 bzw. 8 angegebenen Merkmale gelöst. Vorteilhafte Ausführungsformen der Erfindung sind Gegenstand der Unteransprüche.

Die erfindungsgemäße Überbrückungseinrichtung dient der Überbrückung einer Vertiefung zwischen einem Fahrzeugsitz und einem Laderaumboden und weist ein Basisteil und eine Abdeckplatte auf. Das Basisteil ist vorzugsweise auch plattenförmig ausgebildet und kann beispielsweise fest an dem Kraftfahrzeug angebracht werden. Die Abdeckplatte ist um eine erste Schwenkachse verschwenkbar an dem Basisteil befestigt und in eine vorbestimmte Rotationsrichtung um die erste Schwenkachse vorgespannt. Im Einbauzustand der Überbrückungseinrichtung entspräche diese vorbestimmte Rotationsrichtung beispielsweise derjenigen der zwei möglichen Rotationsrichtungen, die die Abdeckplatte dazu veranlasst, die Vertiefung abzudecken und gegen den Fahrzeugssitz vorgespannt zu sein. Es ist mindestens ein vorgespanntes elastisches Band vorgesehen, das einerseits an dem Basisteil und andererseits an der Abdeckplatte befestigt ist, um die Abdeckplatte in die vorbestimmte Rotationsrichtung vorzuspannen. Das elastische Band, bei dem es sich beispielsweise um ein Gummiband handeln kann, hat den Vorteil, dass während des Verschwenkens der Abdeckplatte um die Schwenkachse keinerlei lästigen Rasselgeräusche auftreten, wie dies beispielsweise bei metallenen Schenkelfedern der Fall ist. Darüber hinaus unterliegt das elastische Band keiner bzw. keiner nennenswerten Materialermüdung, so dass die notwendige Vorspannung dauerhaft gewährleistet ist. Es ist ferner eine an die Rückenlehne eines Fahrzeugsitzes anlegbare Anlageplatte vorgesehen, die um eine zweite Schwenkachse, die parallel zu der ersten Schwenkachse verläuft, verschwenkbar an der Abdeckplatte befestigt ist. Die Anlageplatte ist dabei in dieselbe vorbestimmte Rotationsrichtung um die zweite Schwenkachse vorgespannt. Im Einbauzustand läge die Anlageplatte somit flächig an der Rückseite eines Fahrzeugsitzes an, was den Vorteil hat, dass der Druck auf die Rückenlehne und somit die Abnutzung an derselben geringer ist, als wenn lediglich die Kante der Abdeckplatte anläge. Das vorgespannte elastische Band ist ferner an der Anlageplatte befestigt, um die Anlageplatte in die vorbestimmte Rotationsrichtung vorzuspannen. Somit ist das vorgespannte elastische Band an dem Basisteil, an der Anlageplatte und der Abdeckplatte befestigt. Es wird folglich nur ein elastisches Band benötigt, um die Abdeckplatte und die Anlageplatte in die vorbestimmte Rotationsrichtung vorzuspannen, so dass die Überbrückungseinrichtung einen einfacheren Aufbau besitzt.

In einer bevorzugten Ausführungsform der erfindungsgemäßen Überbrückungseinrichtung ist das vorgespannte elastische Band mittels Ultraschallschweißen an dem Basisteil, der Abdeckplatte und/oder der Anlageplatte befestigt. Somit kann auf Schrauben verzichtet werden, die einerseits den Fertigungsaufwand erhöhen und andererseits von den genannte Teilen hervorstehen können, so dass angrenzende Fahrzeugteile, wie insbesondere die Rückenlehne, beschädigt werden könnten.

Um die erfindungsgemäße Überbrückungseinrichtung besonders einfach und kostengünstig herstellen zu können, sind das Basisteil, die Abdeckplatte und die Anlageplatte in einer weiteren bevorzugten Ausführungsform der erfindungsgemäßen Überbrückungseinrichtung durch ein Verbindungsband, vorzugsweise ein Textilband, miteinander verbunden, wobei die erste und die zweite Schwenkachse von dem Verbindungsband gebildet sind.

Um einen zusammenhängenderen Eindruck der Teile zueinander zu erwecken und die Überbrückungseinrichtung in wenigen Schritten zusammenbauen zu können, sind das Basisteil, die Abdeckplatte und die Anlageplatte in einer vorteilhaften Ausführungsform der erfindungsgemäßen Überbrückungseinrichtung einstückig ausgebildet, wobei die erste Schwenkachse durch eine Materialschwächung zwischen dem Basisteil und der Abdeckplatte und die zweite Schwenkachse durch eine Materialschwächung zwischen der Abdeckplatte und der Anlageplatte ausgebildet. Bei der Materialschwächung könnte es sich beispielsweise um eine lang gestreckte Nut handeln, so dass ähnlich wie bei einem Verbindungsband ein Filmscharnier entsteht.

Um die Überbrückungseinrichtung im Bereich der Schwenkachsen zu entlasten, ist in einer weiteren bevorzugten Ausführungsform der erfindungsgemäßen Überbrückungseinrichtung mindestens ein Anschlagteil vorgesehen, das die Verschwenkbarkeit um die erste und/oder zweite Schwenkachse, vorzugsweise in beiden Rotationsrichtungen, einschränkt. Auf diese Weise würde beispielsweise das Verbindungsband oder das durch die Materialschwächung erzeugte Filmscharnier weniger stark belastet, da die Teile nicht maximal zueinander verschwenkt werden können.

Um ein besonders einfaches Anschlagteil zur Verfügung stellen zu können, das darüber hinaus geeignet ist, die Teile in ihrer Ausrichtung zueinander zu unterstützen, ist das Anschlagteil in einer besonders bevorzugten Ausführungsform der erfindungsgemäßen Überbrückungseinrichtung als biegsame Zunge ausgebildet, die einerseits an dem Basisteil, der Abdeckplatte oder der Anlageplatte befestigt ist und andererseits ein freies Ende aufweist, das an dem Basisteil, der Abdeckplatte oder der Anlageplatte anliegt und in dem eine Führungsnut vorgesehen ist, in die sich ein die Führungsnut hintergreifendes Führungsteil erstreckt, das an dem Basisteil, der Abdeckplatte oder der Anlageplatte vorgesehen ist. Vorzugsweise ist die biegsame Zunge elastisch ausgebildet.

In einer weiteren besonders bevorzugten Ausführungsform der erfindungsgemäßen Überbrückungseinrichtung sind die biegsame Zunge und das Führungsteil in einer Vertiefung in dem Basisteil, der Abdeckplatte und/oder der Anlageplatte derart angeordnet, dass diese nicht aus der Vertiefung hervorstehen. Dies ist insofern von Vorteil, als dass keine hervorstehenden Teile vorhanden sind, die mit anderen Fahrzeugteilen, wie beispielsweise der Rückenlehne, kollidieren können.

Die erfindungsgemäße Kraftfahrzeuginneneinrichtung umfasst einen Laderaumboden, mindestens einen Fahrzeugsitz, der unter Ausbildung einer zwischenliegenden Vertiefung vor dem Laderaumboden angeordnet ist, und mindestens eine Überbrückungseinrichtung. Bei der Überbrückungseinrichtung handelt es sich um die erfindungsgemäße Überbrückungseinrichtung, wobei das Basisteil derart an dem Kraftfahrzeug angeordnet ist, dass die Abdeckplatte in eine die Vertiefung überbrückende Stellung und die Anlageplatte in eine Stellung vorgespannt ist, in der die Anlageplatte flächig an der Rückenlehne des Fahrzeugsitzes anliegt.

In einer vorteilhaften Ausführungsform der erfindungsgemäßen Kraftfahrzeuginneneinrichtung erstreckt sich das vorgespannte elastische Band entlang der dem Fahrzeugsitz zugewandten Seite der Überbrückungseinrichtung. Auf diese Weise ist es für die Fahrzeuginsassen nicht sichtbar.

Um das Anschlagteil vor dem Zugriff durch einen Fahrzeuginsassen und somit den Fahrzeuginsassen vor einer Verletzung zu schützen, ist das Anschlagteil in einer weiteren vorteilhaften Ausführungsform der erfindungsgemäßen Kraftfahrzeuginneneinrichtung auf der dem Fahrzeugsitz zugewandten Seite der Überbrückungseinrichtung angeordnet.

In einer weiteren vorteilhaften Ausführungsform der erfindungsgemäßen Kraftfahrzeuginneneinrichtung kann die Rückenlehne von einer im Wesentlichen aufrechten Gebrauchsposition in eine Nichtgebrauchsposition vorverschwenkt, wobei die Abdeckplatte die Vertiefung sowohl in der Gebrauchsposition als auch in der Nichtgebrauchsposition überbrückt, während die Anlageplatte sowohl in der Gebrauchsposition als auch in der Nichtgebrauchsposition flächig an der Rückenlehne anliegt. Unter der Gebrauchsposition ist hierbei diejenige Position der Rückenlehne zu verstehen, bei der eine Person auf einem entsprechenden Sitzteil Platz nehmen und sich an der Rückenlehne abstützen kann.

In einer weiteren vorteilhaften Ausführungsform der erfindungsgemäßen Kraftfahrzeuginneneinrichtung kann der Fahrzeugsitz von einer hinteren Position in Fahrtrichtung in eine vordere Position verschoben werden und umgekehrt, wobei die Abdeckplatte die Vertiefung sowohl in der hinteren Position als auch in der vorderen Position überbrückt, während die Anlageplatte sowohl in der hinteren Position als auch in der vorderen Position an der Rückenlehne anliegt.

Um das in den Laderaum eingebrachte Ladegut vor einer Beschädigung durch die Überbrückungseinrichtung zu schützen, weist die Abdeckplatte und/oder die Anlageplatte in einer weiteren vorteilhaften Ausführungsform der erfindungsgemäßen Kraftfahrzeuginneneinrichtung auf ihrer dem Fahrzeugsitz abgewandten Seite einen Stoffüberzug auf. Der Stoffüberzug ist somit dem Laderaum bzw. dem Ladegut zugewandt.

Um auch die Abdeckplatte einfach als Abstellfläche für Ladegut verwenden zu können, ist das Basisteil in einer weiteren bevorzugten Ausführungsform der erfindungsgemäßen Kraftfahrzeuginneneinrichtung derart in dem Kraftfahrzeug angeordnet, dass die erste Schwenkachse auf Höhe und unmittelbar vor der dem Fahrzeugsitz zugewandten vorderen Kante des Laderaumbodens angeordnet ist. Auf diese Weise wird ein weitgehend stufenfreier Übergang zwischen der Abdeckplatte und dem Laderaumboden erzielt.

Die Erfindung wird im Folgenden anhand von beispielhaften Ausführungsformen unter Bezugnahme auf die beigefügten Zeichnungen näher erläutert. Es zeigen:
- Fig. 1: eine Vorderansicht einer Ausführungsform der erfindungsgemäßen Überbrückungs- einrichtung,
- Fig. 2: eine geschnittene Darstellung der Über- brückungseinrichtung entlang der Schnitt- linie A-A von Fig. 1,
- Fig. 3: eine schematische Darstellung einer Ausfüh- rungsform der erfindungsgemäßen Kraft- fahrzeuginneneinrichtung mit der Über- brückungseinrichtung aus den Fig. 1 und 2, wobei der Fahrzeugsitz in eine hintere Posi- tion verschoben ist,
- Fig. 4: die Kraftfahrzeuginneneinrichtung von Fig. 3, wobei der Fahrzeugsitz in eine vordere Position verschoben ist und
- Fig. 5: die Kraftfahrzeuginneneinrichtung von Fig. 4, wobei die Rückenlehne in die Nicht- gebrauchsposition verschwenkt ist.

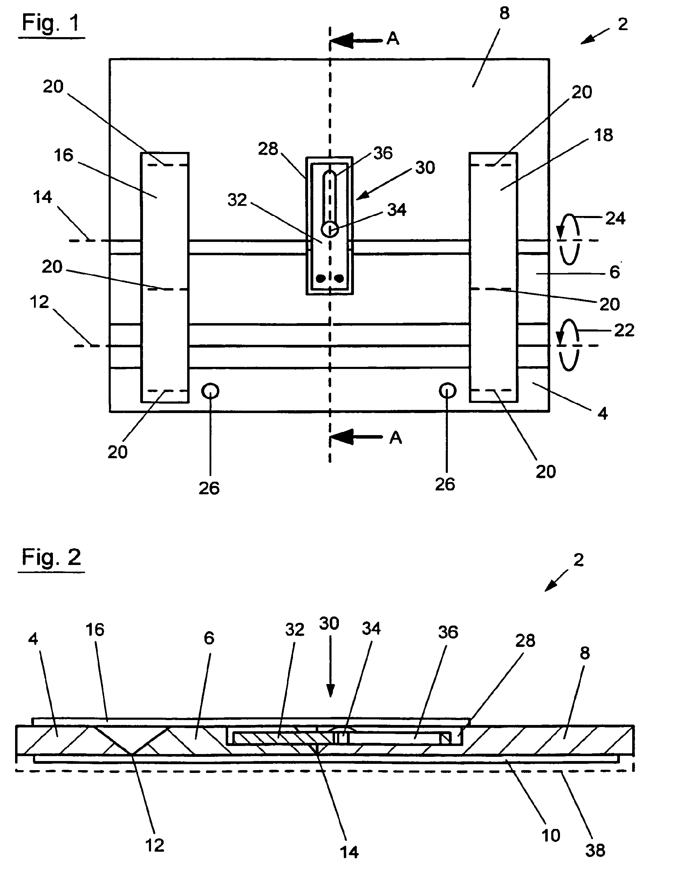

Die Fig. 1 und 2 zeigen eine Ausführungsform der erfindungsgemäßen Überbrückungseinrichtung 2. Die Überbrückungseinrichtung 2 umfasst ein plattenförmiges Basisteil 4, eine Abdeckplatte 6 und eine Anlageplatte 8. Das Basisteil 4, die Abdeckplatte 6 und die Anlageplatte 8 sind über ein durchgehendes Verbindungsband, nämlich ein Textilband 10 (Fig. 2), das auf die Rückseite der genannten Teile geklebt ist, miteinander verbunden. An dem Übergang zwischen dem Basisteil 4 und der Abdeckplatte 6 bildet das Textilband 10 eine erste Schwenkachse 12 und an dem Übergang zwischen der Abdeckplatte 6 und der Anlageplatte 8 bildet das Textilband 10 eine zweite Schwenkachse 14 aus. Die erste und die zweite Schwenkachse 12, 14 verlaufen parallel zueinander. Alternativ könnten das Basisteil, die Abdeckplatte und die Anlageplatte einstückig ausgebildet sein, wobei die erste Schwenkachse durch eine Materialschwächung zwischen dem Basisteil und der Abdeckplatte und die zweite Schwenkachse durch eine Materialschwächung zwischen der Abdeckplatte und der Anlageplatte ausgebildet ist. An der dem Betrachter zugewandten Vorderseite der Überbrückungseinrichtung 2 in Fig. 1 sind ferner zwei vorgespannte elastische Bänder 16, 18 vorgesehen. Die vorgespannten elastischen Bänder 16, 18 sind jeweils an dem Basisteil 4, der Abdeckplatte 6 und der Anlageplatte 8 befestigt. Im vorliegenden Beispiel wurde die Befestigung durch Ultraschallschweißen erzeugt, wie dies anhand der gestrichelt dargestellten Schweißlinien 20 angedeutet ist. Grundsätzlich können jedoch auch andere Befestigungsmethoden gewählt werden, wie beispielsweise das Festschrauben mit entsprechenden Schrauben. Die Vorspannung der elastischen Bänder 16, 18 bewirkt eine Vorspannung der Abdeckplatte 6 gegenüber dem Basisteil 4 in eine vorbestimmte Rotationsrichtung 22 um die erste Schwenkachse 12. Gleichermaßen bewirkt die Vorspannung der elastischen Bänder 16, 18 eine Vorspannung der Anlageplatte 8 gegenüber der Abdeckplatte 6 in eine vorbestimmte Rotationsrichtung 24 um die zweite Schwenkachse 14. Die beiden vorbestimmten Rotationsrichtungen 22, 24 entsprechen einander.

In dem Basisteil 4 sind ferner zwei Aussparungen 26 vorgesehen, über die das Basisteil 4 an dem Kraftfahrzeug mittels Schrauben befestigt werden kann. Darüber hinaus weisen die einander zugewandten Kanten des Basisteils 4 und der Abdeckplatte 6 jeweils einen schrägen Verlauf auf, so dass die Abdeckplatte 6 gegenüber dem Basisteil 4 kollisionsfrei in die vorbestimmte Rotationsrichtung 22 um die erste Schenkachse 12 verschwenkt werden kann, wie dies später eingehender erläutert wird. Auch die der Anlageplatte 8 zugewandte Kante der Abdeckplatte 6 weist einen solchen schrägen Verlauf auf.

In der Vorderseite der Überbrückungseinrichtung 2 ist ferner eine Vertiefung 28 vorgesehen, die sich von der Abdeckplatte 6 quer zu der zweiten Schwenkachse 14 bis in die Anlageplatte 8 erstreckt. Innerhalb der Vertiefung 28 ist ein Anschlagteil 30 vorgesehen, das die Verschwenkbarkeit um die zweite Schwenkachse 14 in beiden Rotationsrichtungen einschränkt. Das Anschlagteil 30 setzt sich aus einer elastisch biegsamen Zunge 32 und einem pilzförmigen Führungsteil 34 zusammen. Die biegsame Zunge 32 ist einerseits an der Abdeckplatte 6 befestigt und weist andererseits ein freies Ende auf, das an der Anlageplatte 8 anliegt. In dem freien Ende ist eine Führungsnut 36 ausgebildet, die sich rechtwinklig zu der zweiten Schwenkachse 14 erstreckt. Das pilzförmige Führungsteil 34 ist fest mit der Anlageplatte 8 verbunden und erstreckt sich mit seinem unteren Abschnitt durch die Führungsnut 36 und hintergreift die Führungsnut 36 bzw. die biegsame Zunge 32 mit seinem Kopfabschnitt. Die Tiefe der Vertiefung 28 ist dabei derart gewählt, dass weder die biegsame Zunge 32 noch das pilzförmige Führungsteil 34 aus der Vertiefung 28 hervorstehen.

Beim Verschwenken der Anlageplatte 8 um die zweite Schwenkachse 14 biegt sich die Zunge 32 elastisch und das pilzförmige Führungsteil 34 bewegt sich relativ in der Führungsnut 36. Die Führungsnut 36 ist an ihren beiden Enden geschlossen ausgebildet, so dass das pilzförmige Führungsteil 34 anschlägt und eine weitere Schwenkbewegung unterbindet, wenn die Anlageplatte 8 bis zu einem gewissen Maße in die eine oder andere Rotationsrichtung um die zweite Schwenkachse 14 verschwenkt wurde.

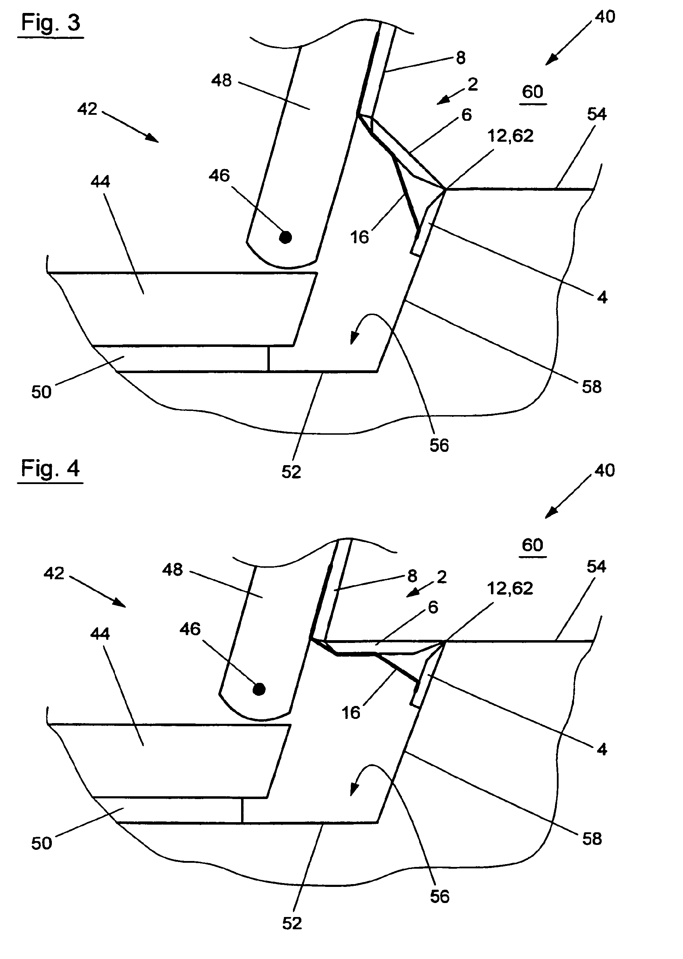

Wie aus Fig. 2 hervorgeht, ist auf der Rückseite der Überbrückungseinrichtung 2 ferner ein Stoffüberzug 38 vorgesehen, der anhand einer gestrichelten Linie angedeutet ist und die Textilbänder 10 verdeckt. Nachstehend wird die Verwendung der zuvor beschriebenen Überbrückungseinrichtung 2 in einer Ausführungsform der erfindungsgemäßen Kraftfahrzeuginneneinrichtung 40 unter Bezugnahme auf die Fig. 3 bis 5 beschrieben, wobei zur Vereinfachung der Darstellung lediglich das Basisteil 4, die Abdeckplatte 6, die Anlageplatte 8 und das vorgespannte elastische Band 18 der Überbrückungseinrichtung 2 in den genannten Figuren gezeigt ist.

Die Kraftfahrzeuginneneinrichtung 40 weist einen Fahrzeugsitz 42 auf, der ein Sitzteil 44 und eine um eine Achse 46 verschwenkbare Rückenlehne 48 umfasst. Der Fahrzeugsitz 42 ist über eine Mechanik 50 an dem Sitzteil 44 mit dem Fahrzeugboden 52 verbunden. Hinter dem Fahrzeugsitz 42 ist ein Laderaumboden 54 ausgebildet, der erhaben gegenüber dem Fahrzeugboden 52 ausgebildet ist, so dass zwischen dem Fahrzeugsitz 42 und dem Laderaumboden 54 eine Vertiefung 56 ausgebildet ist. Der Fahrzeugboden 52 ist mit dem Laderaumboden 54 über eine Schräge 58 verbunden.

Das Basisteil 4 der Überbrückungseinrichtung 2 ist derart an der Schräge 58 angeordnet, dass die Abdeckplatte 6 durch die vorgespannten elastischen Bänder 16, 18 in eine die Vertiefung 56 überbrückende Stellung und die Anlageplatte 8 in eine Stellung vorgespannt ist, in der die Anlageplatte 8 flächig an der Rückenlehne 48 des Fahrzeugsitzes 42 anliegt. Dabei erstrecken sich die vorgespannten elastischen Bänder 16, 18 entlang der dem Fahrzeugsitz 48 zugewandten Seite der Überbrückungseinrichtung 2, während die mit dem Stoffüberzug 38 versehene Seite der Überbrückungseinrichtung 2 entgegen der Fahrtrichtung 58 nach hinten zu dem Laderaum 60 weist. Die erste Schwenkachse 12 der Überbrückungseinrichtung 2 befindet sich vorteilhafterweise auf Höhe und unmittelbar vor einer dem Fahrzeugsitz 42 zugewandten vorderen Kante 62 des Laderaumbodens 54.

Fig. 3 zeigt den Fahrzeugsitz 42 in einer hinteren Position. Nun kann der Fahrzeugsitz 42 über die Mechanik 50 in Fahrtrichtung 58 in eine vordere Position verschoben werden, die in Fig. 4 gezeigt ist. Durch die Vorspannung der elastischen Bänder 16, 18 wird die Abdeckplatte 6 um die erste Schwenkachse 12 in die vorbestimmte Rotationsrichtung 22 verschwenkt, so dass diese von der ursprünglich schrägen Stellung in eine Stellung übergeht, in der die Schräglage geringer bzw. in der die Abdeckplatte 6 horizontal über der Vertiefung 56 ausgerichtet ist. Die Anlageplatte 8 liegt auch in der vorderen Position an der Rückenlehne an, wobei die Anlageplatte 8 durch das Verschwenken der Abdeckplatte 6 leicht entgegen der vorbestimmten Rotationsrichtung 24 um die zweite Schwenkachse 14 verschwenkt ist.

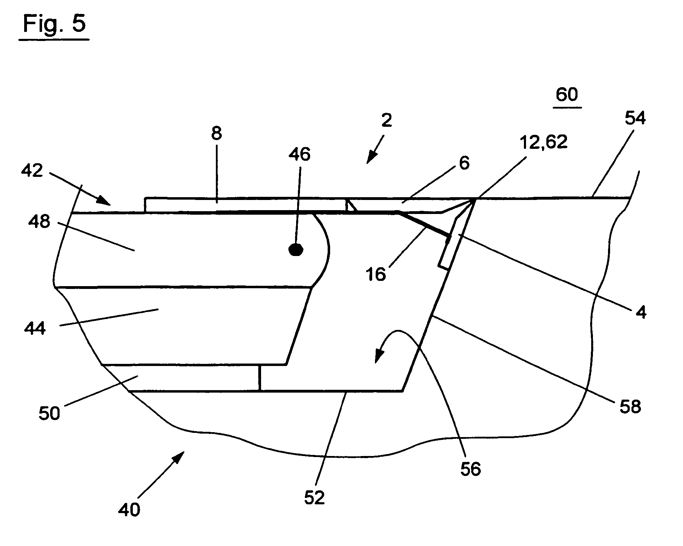

Ferner kann die Rückenlehne 48 von einer im Wesentlichen aufrechten Gebrauchsposition, die in den Fig. 3 und 4 gezeigt ist, in eine Nichtgebrauchsposition nach vorne auf das Sitzteil 44 verschwenkt werden (Fig. 5), wobei die Abdeckplatte 6 die Vertiefung 56 sowohl in der Gebrauchsposition als auch in der Nichtgebrauchsposition überbrückt, während die Anlageplatte 8 sowohl in der Gebrauchsposition als auch in der Nichtgebrauchsposition an der Rückenlehne 48 anliegt. Bei der in Fig. 5 dargestellten Nichtgebrauchsposition ist ein weiteres Verschwenken der Anlageplatte 8 um die zweite Schwenkachse 14 derart durch das Anschlagteil 30 (Fig. 1, 2) unterbunden, dass die Abdeckplatte 6 und die Anlageplatte 8 in einer Ebene angeordnet sind, die auch der Ebene des Laderaumbodens 54 entspricht.

Da die Anlageplatte 8 lediglich an die Rückenlehne 48 angelegt und nicht fest mit dieser verbunden ist, kann der Fahrzeugsitz 42 mit Hilfe der Mechanik 50 ferner quer zur Fahrtrichtung - also entlang der Normalen des vorliegenden Zeichnungsblattes - verschoben werden, ohne dass dieser durch die Überbrückungseinrichtung 2 behindert würde, die an der Rückenlehne 48 entlang gleitet.

### Bezugszeichenliste

- 2: Überbrückungseinrichtung
- 4: Basisteil
- 6: Abdeckplatte
- 8: Anlageplatte
- 10: Textilband
- 12: erste Schwenkachse
- 14: zweite Schwenkachse
- 16: elastisches Band
- 18: elastisches Band
- 20: Schweißlinie
- 22: vorbestimmte Rotationsrichtung
- 24: vorbestimmte Rotationsrichtung
- 26: Aussparungen
- 28: Vertiefung
- 30: Anschlagteil
- 32: Zunge
- 34: Führungsteil
- 36: Führungsnut
- 38: Stoffüberzug
- 40: Kraftfahrzeuginneneinrichtung
- 42: Fahrzeugsitz
- 44: Sitzteil
- 46: Achse
- 48: Rückenlehne
- 50: Mechanik
- 52: Fahrzeugboden
- 54: Laderaumboden
- 56: Vertiefung
- 58: Schräge
- 60: Laderaum
- 62: Kante

## Patentansprüche

1. Überbrückungseinrichtung für eine Vertiefung zwischen einem Fahrzeugsitz und einem Laderaumboden mit einem Basisteil (4) und einer Abdeckplatte (6), wobei die Abdeckplatte (6) um eine erste Schwenkachse (12) verschwenkbar an dem Basisteil (4) befestigt und in eine vorbestimmte Rotationsrichtung (22) um die erste Schwenkachse (12) vorgespannt ist und ferner eine an die Rückenlehne eines Fahrzeugsitzes anlegbare Anlageplatte (8) vorgesehen ist, die um eine zweite Schwenkachse (14), die parallel zu der ersten Schwenkachse (12) verläuft, verschwenkbar an der Abdeckplatte (6) befestigt ist, **dadurch gekennzeichnet, dass** mindestens ein vorgespanntes elastisches Band (16, 18) vorgesehen ist, das einerseits an dem Basisteil (4) und andererseits an der Abdeckplatte (6) befestigt ist, um die Abdeckplatte (6) in die vorbestimmte Rotationsrichtung (22) vorzuspannen, wobei die Anlageplatte (8) in die selbe vorbestimmte Rotationsrichtung (22; 24) um die zweite Schwenkachse (14) vorgespannt ist und das vorgespannte elastische Band (16, 18) ferner an der Anlageplatte (8) befestigt ist, um die Anlageplatte (8) in die vorbestimmte Rotationsrichtung (24) in eine Stellung vorzuspannen, in der die Anlageplatte (8) flächig an der Rückenlehne des Fahrzeugsitzes anliegt.

2. Überbrückungseinrichtung nach Ansprunch 1 , **dadurch gekennzeichnet, dass** das vorgespannte elastische Band (16, 18) mittels Ultraschallschweißen an dem Basisteil (4), der Abdeckplatte (6) und/oder der Anlageplatte (8) befestigt ist.

3. Überbrückungseinrichtung nach einem der vorangehenden Ansprüche, **dadurch gekennzeichnet, dass** das Basisteil (4), die Abdeckplatte (6) und die Anlageplatte (8) durch ein Verbindungsband, vorzugsweise ein Textilband (10), miteinander verbunden sind, wobei die erste und die zweite Schwenkachse (12, 14) von dem Verbindungsband gebildet sind.

4. Überbrückungseinrichtung nach einem der vorangehenden Ansprüche, **dadurch gekennzeichnet, dass** das Basisteil, die Abdeckplatte und die Anlageplatte einstückig ausgebildet sind, wobei die erste Schwenkachse durch eine Materialschwächung zwischen dem Basisteil und der Abdeckplatte und die zweite Schwenkachse durch eine Materialschwächung zwischen der Abdeckplatte und der Anlageplatte ausgebildet ist.

5. Überbrückungseinrichtung nach einem der vorangehenden Ansprüche, **dadurch gekennzeichnet, dass** mindestens ein Anschlagteil (30) vorgesehen ist, das die Verschwenkbarkeit um die erste und/oder zweite Schwenkachse (12, 14), vorzugsweise in beiden Rotationsrichtungen, einschränkt.

6. Überbrückungseinrichtung nach Anspruch 5, **dadurch gekennzeichnet, dass** das Anschlagteil (30) als biegsame Zunge (32) ausgebildet ist, die einerseits an dem Basisteil, der Abdeckplatte (6) oder der Anlageplatte befestigt ist und andererseits ein freies Ende aufweist, das an dem Basisteil, der Abdeckplatte oder der Anlageplatte (8) anliegt und in dem eine Führungsnut (36) vorgesehen ist, in die sich ein die Führungsnut (36) hintergreifendes Führungsteil (34) erstreckt, das an dem Basisteil, der Abdeckplatte oder der Anlageplatte (8) vorgesehen ist.

7. Überbrückungseinrichtung nach Anspruch 6, **dadurch gekennzeichnet, dass** die biegsame Zunge (32) und das Führungsteil (34) in einer Vertiefung (28) in dem Basisteil, der Abdeckplatte (6) und/oder der Anlageplatte (8) derart angeordnet sind, dass diese nicht aus der Vertiefung (28) hervorstehen.

8. Kraftfahrzeuginneneinrichtung mit einem Laderaumboden (54), mindestens einem Fahrzeugsitz (42), der unter Ausbildung einer zwischenliegenden Vertiefung (56) vor dem Laderaumboden (54) angeordnet ist, und mindestens einer Überbrückungseinrichtung (2), **dadurch gekennzeichnet, dass** die Überbrückungseinrichtung eine Überbrückungseinrichtung (2) nach einem der Ansprüche 1 bis 7 ist, wobei das Basisteil (4) derart an dem Kraftfahrzeug angeordnet ist, dass die Abdeckplatte (6) in eine die Vertiefung (56) überbrückende Stellung und die Anlageplatte (8) in eine Stellung vorgespannt ist, in der die Anlageplatte (8) flächig an der Rückenlehne (48) des Fahrzeugsitzes (42) anliegt.

9. Kraftfahrzeuginneneinrichtung nach Anspruch 8, **dadurch gekennzeichnet, dass** sich das vorgespannte elastische Band (16, 18) entlang der dem Fahrzeugsitz (48) zugewandten Seite der Überbrückungseinrichtung (2) erstreckt.

10. Kraftfahrzeuginneneinrichtung nach einem der Ansprüche 8 oder 9, **dadurch gekennzeichnet, dass** das Anschlagteil (30) auf der dem Fahrzeugsitz (42) zugewandten Seite der Überbrückungseinrichtung (2) angeordnet ist.

11. Kraftfahrzeuginneneinrichtung nach einem der Ansprüche 8 bis 10, **dadurch gekennzeichnet, dass** die Rückenlehne (48) von einer im Wesentlichen aufrechten Gebrauchsposition in eine Nichtgebrauchsposition vorverschwenkbar ist, wobei die Abdeckplatte (6) die Vertiefung (56) sowohl in der Gebrauchsposition als auch in der Nichtgebrauchsposition überbrückt, während die Anlageplatte (8) sowohl in der Gebrauchsposition als auch in der Nichtgebrauchsposition an der Rückenlehne (48) anliegt.

12. Kraftfahrzeuginneneinrichtung nach einem der Ansprüche 8 bis 11, **dadurch gekennzeichnet, dass** der Fahrzeugsitz (42) von einer hinteren Position in Fahrtrichtung (58) in eine vordere Position verschiebbar ist und umgekehrt, wobei die Abdeckplatte (6) die Vertiefung (56) sowohl in der hinteren Position als auch in der vorderen Position überbrückt, während die Anlageplatte (8) sowohl in hinteren Position als auch in der vorderen Position an der Rückenlehne (48) anliegt.

13. Kraftfahrzeuginneneinrichtung nach einem der Ansprüche 8 bis 12, **dadurch gekennzeichnet, dass** die Abdeckplatte (6) und/oder die Anlageplatte (8) auf ihrer dem Fahrzeugsitz (42) abgewandten Seite einen Stoffüberzug (38) aufweist.

14. Kraftfahrzeuginneneinrichtung nach einem der Ansprüche 8 bis 13, **dadurch gekennzeichnet, dass** das Basisteil (4) derart in dem Kraftfahrzeug angeordnet ist, dass die erste Schwenkachse (12) auf Höhe und unmittelbar vor der dem Fahrzeugsitz (42) zugewandten vorderen Kante (62) des Laderaumbodens (54) angeordnet ist.

## Claims

1. A bridging device for a depression between a vehicle seat and a loading space base, comprising a base part (4) and a cover plate (6), with the cover plate (6) being pivotably fastened to the base part (4) to pivot around a first pivot axis (12) and being pretensioned in a predetermined rotational direction (22) around the first pivot axis (12), and further provided with a contact plate (8) which can be placed against the backrest of a vehicle seat and which is pivotably fastened to the cover plate (6) around a second pivot axis (14) which extends parallel to the first pivot axis (12), **characterized in that** at least one pretensioned elastic band (16, 18) is provided, which is fastened on the one hand to the base part (4) and on the other hand to the cover plate (6) in order to pretension the cover plate (6) in the predetermined rotational direction (22), with the contact plate (8) being pretensioned in the same predetermined rotational direction (22; 24) around the second pivot axis (14), and the pretensioned elastic band (16, 18) is further fastened to the contact plate (8) in order to pretension the contact plate (8) in the predetermined rotational direction (24) to a position in which the contact plate (8) rests flatly on the backrest of the vehicle seat.

2. A bridging device according to claim 1, **characterized in that** the pretensioned elastic band (16, 18) is fastened by means of ultrasonic welding to the base part (4), the cover part (6) and/or the contact plate (8).

3. A bridging device according to one of the preceding claims, **characterized in that** the base part (4), the cover plate (6) and the contact plate (8) are connected with each other by a connecting tape, preferably a fabric tape (10), with the first and second pivot axis (12, 14) being formed by the connecting tape.

4. A bridging device according to one of the preceding claims, **characterized in that** the base part, the cover part and the contact plate are integrally arranged, with the first pivot axis being formed by a weakening in the material between the base part and the cover plate, and the second pivot axis being formed by a weakening in the material between the cover plate and the contact plate.

5. A bridging device according to one of the preceding claims, **characterized in that** at least one limit stop part (30) is provided which limits the pivotability around the first and/or second pivot axis (12, 14), preferably in both rotational directions.

6. A bridging device according to claim 5, **characterized in that** the limit stop part (30) is arranged as a flexible tongue (32) which is fastened on the one hand to the base part, the cover plate (6) or the contact plate and comprises a free end on the other hand, which end rests on the base part, the cover plate or the contact plate (8) and in which a guide groove (36) is provided, into which a guide part (34) extends which engages behind the guide groove (36) and which is provided on the base part, the cover plate or the contact plate (8).

7. A bridging device according to claim 6, **characterized in that** the flexible tongue (32) and the guide part (34) are arranged in a depression (28) in the base part, the cover plate (6) and/or the contact plate (8) that they do not protrude from the depression (28).

8. An interior trim of a motor vehicle, comprising a loading space base (54), at least one vehicle seat (42) which is arranged in front of the loading space base (54) by forming an interposed depression (56), and at least one bridging device (2), **characterized in that** the bridging device is a bridging device (2) according to one of the claims 1 to 7, with the base part (4) being arranged on the motor vehicle in such a way that the cover plate (6) is pretensioned in a position bridging the depression (56) and the contact plate (8) is pretensioned in a position in which the contact plate (8) rests flatly on the backrest (48) of the vehicle seat (42).

9. An interior trim of a motor vehicle according to claim 8, **characterized in that** the pretensioned elastic band (16, 18) extends along the side of the bridging device (2) which faces the vehicle seat (48).

10. An interior trim of a motor vehicle according to one of the claims 8 or 9, **characterized in that** the limit stop part (30) is arranged on the side of the bridging device (2) which faces the vehicle seat (42).

11. An interior trim of a motor vehicle according to one of the claims 8 to 10, **characterized in that** the backrest (48) can be pre-pivoted from a substantially upright position of use to a position of non-use, with the cover plate (6) bridging the depression (56) both in the position of use and also in the position of non-use, while the contact plate (8) rests on the backrest (48) both in the position of use and also in the position of non-use.

12. An interior trim of a motor vehicle according to one of the claims 8 to 11, **characterized in that** the vehicle seat (42) is displaceable from a rear position in the direction of travel (58) to a front position and vice versa, with the cover plate (6) bridging the depression (56) both in the rear position and also in the front position, while the contact plate (8) rests on the backrest (48) both in the rear position and also in the front position.

13. An interior trim of a motor vehicle according to one of the claims 8 to 12, **characterized in that** the cover plate (6) and/or the contact plate (8) has a fabric covering (38) on its side facing away from the vehicle seat (42).

14. An interior trim of a motor vehicle according to one of the claims 8 to 13, **characterized in that** the base part (4) is arranged in the motor vehicle in such a way that the first pivot axis (12) is arranged at the level and directly in front of the front edge (62) of the loading space base (54) facing the vehicle seat (42).

## Revendications

1. Dispositif comble-lacune pour un creux entre un siège de véhicule et un plancher de coffre à bagages avec une partie de base (4) et une plaque de couverture (6), dans lequel la plaque de couverture (6) est fixée sur la partie de base (4) de façon à pouvoir pivoter autour d'un premier axe de pivotement (12) et précontrainte dans un premier sens de rotation (22) autour du premier axe de pivotement (12) et il est prévu en outre une plaque d'appui (8) pouvant être appuyée sur le dossier du siège du véhicule, qui est fixée sur la plaque de couverture (6) de façon à pouvoir pivoter autour d'un deuxième axe de pivotement (14) parallèle au premier axe de pivotement (12), **caractérisé en ce qu'**il est prévu au moins une bande élastique précontrainte (16, 18) qui est fixée, d'une part, sur la partie de base (4) et d'autre part sur la plaque de couverture (6) pour précontraindre la plaque de couverture (6) dans le sens de rotation prédéterminé (22), la plaque d'appui (8) étant précontrainte dans le même sens de rotation prédéterminé (22 ; 24) autour du deuxième axe de pivotement (14) et la bande élastique précontrainte (16, 18) étant en outre fixée à la plaque d'appui (8) afin de précontraindre la plaque d'appui (8) dans le sens de rotation prédéterminé (24) dans une position dans laquelle la plaque d'appui (8) repose à plat sur le dossier du siège de véhicule.

2. Dispositif comble-lacune selon la revendication 1, **caractérisé en ce que** la bande élastique précontrainte (16, 18) est fixée au moyen d'un soudage par ultrasons sur la partie de base (4), la plaque de couverture (6) et/ou la plaque d'appui (8).

3. Dispositif comble-lacune selon l'une des revendications précédentes, **caractérisé en ce que** la partie de base (4), la plaque de couverture (6) et la plaque d'appui (8) sont reliées entre elles par une bande de liaison, de préférence une bande textile (10), le premier axe de pivotement et le deuxième (12, 14) étant formés par la bande de liaison.

4. Dispositif comble-lacune selon l'une des revendications précédentes, **caractérisé en ce que** la partie de base, la plaque de couverture et la plaque d'appui sont formées d'un seul tenant, le premier axe de pivotement étant formé par un affaiblissement du matériau entre la partie de base et la plaque de couverture et le deuxième axe de pivotement par un affaiblissement du matériau entre la plaque de couverture et la plaque d'appui.

5. Dispositif comble-lacune selon l'une des revendications précédentes, **caractérisé en ce qu'**il est prévu au moins une pièce formant butée (30) qui restreint la liberté de pivotement autour du premier axe de pivotement et/ou du deuxième (12, 14), de préférence dans les deux sens de rotation.

6. Dispositif comble-lacune selon la revendication 5, **caractérisé en ce que** la pièce formant butée (30) est conçue comme une languette flexible (32) qui est fixée d'un côté sur la partie de base, la plaque de couverture (6) ou la plaque d'appui et présente de l'autre côté une extrémité libre qui repose sur la partie de base, la plaque de couverture ou la plaque d'appui (8) et dans laquelle est prévue une gorge de guidage (36) dans laquelle s'étend une partie de guidage (34) qui se met en prise par l'arrière dans la gorge de guidage (36) et qui est prévue sur la partie de base, la plaque de couverture ou la plaque d'appui (8).

7. Dispositif comble-lacune selon la revendication 6, **caractérisé en ce que** la languette flexible (32) et la partie de guidage (34) sont disposées dans un creux (28) dans la partie de base, la plaque de couverture (6) et/ou la plaque d'appui (8) de telle manière qu'elles ne dépassent pas du creux (28).

8. Aménagement intérieur de véhicule avec un plancher de coffre à bagages (54), au moins un siège de véhicule (42) qui est disposé devant le plancher de coffre à bagages (54) en formant entre eux un creux (56) et avec au moins un dispositif comble-lacune (2), **caractérisé en ce que** le dispositif comble-lacune est un dispositif comble-lacune (2) selon l'une des revendications 1 à 7, dans lequel la partie de base (4) est disposée sur le véhicule à moteur de telle manière que la plaque de couverture (6) soit précontrainte dans une position couvrant le creux (56) et la plaque d'appui (8) dans une position dans laquelle la plaque d'appui (8) repose à plat sur le dossier (48) du siège de véhicule (42).

9. Aménagement intérieur de véhicule selon la revendication 8, **caractérisé en ce que** la bande élastique précontrainte (16, 18) s'étend le long du côté du dispositif comble-lacune (2) tourné vers le siège de véhicule (48).

10. Aménagement intérieur de véhicule selon l'une des revendications 8 ou 9, **caractérisé en ce que** la pièce formant butée (30) est disposée sur le côté du dispositif comble-lacune (2) tourné vers le siège de véhicule (42).

11. Aménagement intérieur de véhicule selon l'une des revendications 8 à 10, **caractérisé en ce que** le dossier (48) peut être basculé vers l'avant d'une position d'utilisation sensiblement verticale à une position de non-utilisation, la plaque de couverture (6) couvrant le creux (56) aussi bien dans la position d'utilisation que dans la position de non utilisation, tandis que la plaque d'appui (8) repose sur le dossier (48) dans la position d'utilisation aussi bien que dans la position de non-utilisation.

12. Aménagement intérieur de véhicule selon l'une des revendications 8 à 11, **caractérisé en ce que** le siège de véhicule (42) peut être déplacé d'une position en arrière dans le sens de la marche (58) à une position en avant et vice versa, la plaque de couverture (6) couvrant le creux (56) aussi bien dans la position en arrière que dans la position en avant, tandis que la plaque d'appui (8) repose sur le dossier (48) aussi bien dans la position en arrière que dans la position en avant.

13. Aménagement intérieur de véhicule selon l'une des revendications 8 à 12, **caractérisé en ce que** la plaque de couverture (6) et/ou la plaque d'appui (8) présentent un habillage textile (38) sur leur côté tourné vers le siège de véhicule (42).

14. Aménagement intérieur de véhicule selon l'une des revendications 8 à 13, **caractérisé en ce que** la partie de base (4) est disposée dans le véhicule à moteur de telle façon que le premier axe de pivotement (12) soit disposé à la même hauteur et immédiatement avant le bord antérieur (62) du plancher de l'espace de chargement (54) orienté vers le siège de véhicule (42).
